# EUROPEAN PATENT APPLICATION

(11) **EP 3 483 858 A2**
(43) Date of publication of application: **15.05.2019**
(21) Application number: 18192968.8
(22) Date of filing: 06.09.2018
(51) Int. Cl.: G08G 5/00, G01S 13/94

(54) **AIRCRAFT ROUTE SYSTEMS**

(30) Priority: 08.11.2017 US 201715807018
(71) Applicant: Sikorsky Aircraft Corporation, Stratford, CT 06615 (US)
(72) Inventor: WARD, Marc D., Milford, CT Connecticut 06460 (US); LAMPAZZI, Margaret M., Oxford, CT Connecticut 06478 (US); SAHAY, Prateek, Acton, MA Massachusetts 01720 (US); BURDIS, John M., Naugatuck, CT Connecticut 06770 (US)
(74) Representative: Schmitt-Nilson Schraud Waibel Wohlfrom Patentanwälte Partnerschaft mbB

(57) **Abstract**

A non-transitory computer readable medium includes computer executable instructions for performing a method, the method comprising generating a graphical user interface (GUI) on a display. The GUI can be configured to display aircraft route information and to receive one or more real-time aircraft route inputs. The method also includes receiving, at the GUI, the one or more real-time aircraft route inputs from an input device and conforming the one or more real-time aircraft route inputs to a conformed route. The method includes outputting a conformed route to at least one of the GUI and/or an aircraft control system.

## Description

This invention was made with government support under contract no. HR0011-17-9-0004 awarded by the Defense Advanced Research Projects Agency. The government has certain rights in the invention.

The present disclosure relates to aircraft control systems, more specifically to aircraft route systems (e.g., and inputs and outputs thereof).

In existing autonomous path planners, a best guess at a landing runway and approach path to the runway is made. However the designated landing site (e.g., which runway is active) can change at the discretion of the air traffic controller, for example. Currently there is no easy, quick, efficient way for the operator to amend the autonomous approach path and planned landing runway/site, requiring the operator to take over flight manually from the autonomous flight systems.

Such conventional methods and systems have generally been considered satisfactory for their intended purpose. However, there is still a need in the art for improve aircraft route systems such that the operator can influence the route and not disengage the autonomous system, thereby continuing to benefit from the intelligent, autonomous system, for example. The present disclosure provides a solution for this need.

A non-transitory computer readable medium includes computer executable instructions for performing a method and/or any suitable portion thereof, the method comprising generating a graphical user interface (GUI) on a display. The GUI can be configured to display aircraft route information and to receive one or more real-time aircraft route inputs. The method also includes receiving, at the GUI, the one or more real-time aircraft route inputs from an input device and conforming the one or more real-time aircraft route inputs to a conformed route. The method includes outputting a conformed route to at least one of the GUI and/or an aircraft control system.

The method can include displaying the real-time aircraft route inputs as they are created. Real-time route inputs can be drag created (e.g., drawn on) using the input device. In certain embodiments, the input device can include a touchscreen interface, for example (e.g., to allow a user draw a route in real time with their finger).

Conforming the one or more real-time aircraft route inputs to a conformed route can include determining at least one of one or more route goalpoints (e.g., charted waypoints or any other suitable 2D or 3D point), one or more altitudes along the route, one or more descent and/or climb rates along the route, one or more airspeeds along the route, one or more obstacle and/or terrain factors, and/or one or more aircraft system configurations along the route based on the one or more real-time aircraft route inputs. Any other suitable flight characteristics and/or factors affecting flight are contemplated herein.

In certain embodiments, conforming the one or more real-time aircraft route inputs to a conformed route can include conforming the real-time aircraft route inputs to one or more flight standards. For example, the one or more flight standards can include at least one of visual flight rules, instrument flight rules, obstacle clearance, traffic clearance, or airspace speed limitations.

In certain embodiments, the displayed aircraft route information can include an airport runway diagram (e.g., for the approach and landing phase of flight). Conforming the one or more real-time aircraft route inputs to a conformed route can include approximating the one or more real-time aircraft route inputs to an airport entry route (e.g., a midfield overflying entry, a 45 degree downwind entry), an airport pattern (e.g., a traditional box left turn pattern), and/or an approach (e.g., an instrument approach). Certain embodiments can aircraft rout information that has unpaved fields, runways, or any other suitable landing zones that don't necessarily have an FAA documented/depicted runway diagram, for example.

In certain embodiments, conforming the one or more real-time aircraft route inputs to a conformed route can include receiving obstacle and/or terrain sensor data and/or traffic data for obstacle and/or terrain and/or traffic avoidance. In certain embodiments, the method can include automatically updating the conformed route based on the obstacle and/or terrain sensor data as the aircraft progresses along the route to avoid obstacles and/or terrain.

The method can further include displaying the conformed route on the GUI and requesting execution of the conformed route before outputting the conformed route to the aircraft control system. In certain embodiments, the conformed route can be calculated and output (e.g., to the GUI and/or to the aircraft control system) in real-time as the user inputs the real-time input route.

In accordance with at least one aspect of this disclosure, an aircraft can include a navigational device having a non-transitory computer readable medium comprising computer executable instructions for performing a method and/or any suitable portion thereof as described herein. The aircraft can include one or more obstacle and/or terrain detection systems, e.g., configured to provide data to the navigational device. The one or more obstacle and/or terrain detection systems can include a Light Detecting and Ranging (LIDAR) system, for example. The aircraft control system can be a smart system configured to control at least the aircraft position and power settings. Any other suitable system is contemplated herein.

In accordance with at least one aspect of this disclosure, a portable computing device can include a non-transitory computer readable medium having computer executable instructions for performing a method and/or any suitable portion thereof as described herein. The portable device can be a touch-screen tablet, for example, or any other suitable device.

These and other features of the systems and methods of the subject disclosure will become more readily apparent to those skilled in the art from the following detailed description taken in conjunction with the drawings.

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is flow diagram of an embodiment of a method in accordance with this disclosure; and
Figs. 2A is a schematic of an embodiment of a graphical user interface (GUI) in accordance with this disclosure, showing an airport runway diagram and an initial route into the airport;
Figs. 2B-2E are schematic animations of a user inputting a real-time aircraft route input into the graphical user interface of Fig. 2A;
Fig. 2F shows the embodiment of the graphical user interface of Fig. 2A, showing the real-time aircraft route input completed; and
Fig. 2G is a schematic of the embodiment of Fig. 2B, showing an embodiment of a conformed route replacing the input route; and
Fig. 2H shows an animation of a user selecting an execution button to cause the aircraft to fly the conformed route.

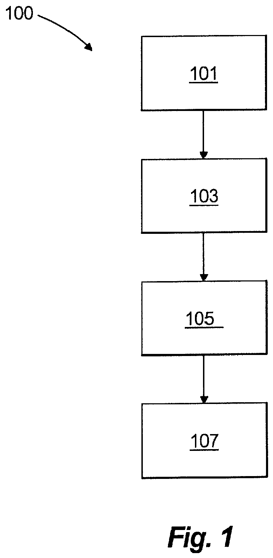

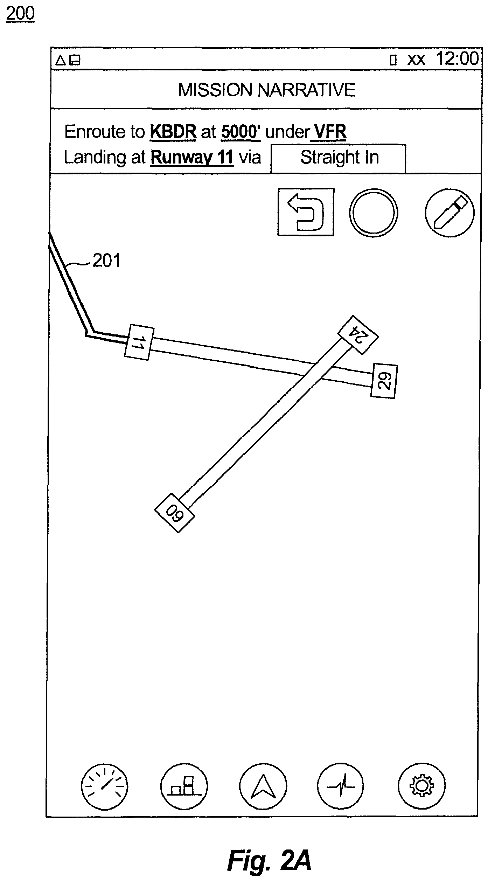

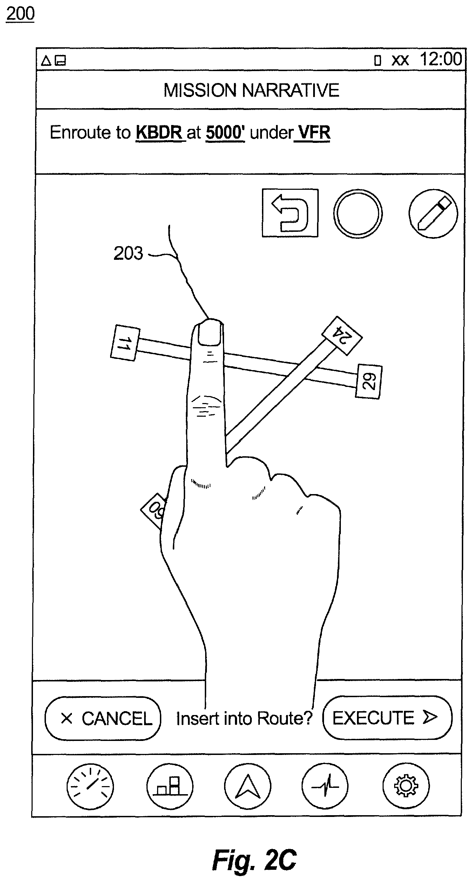

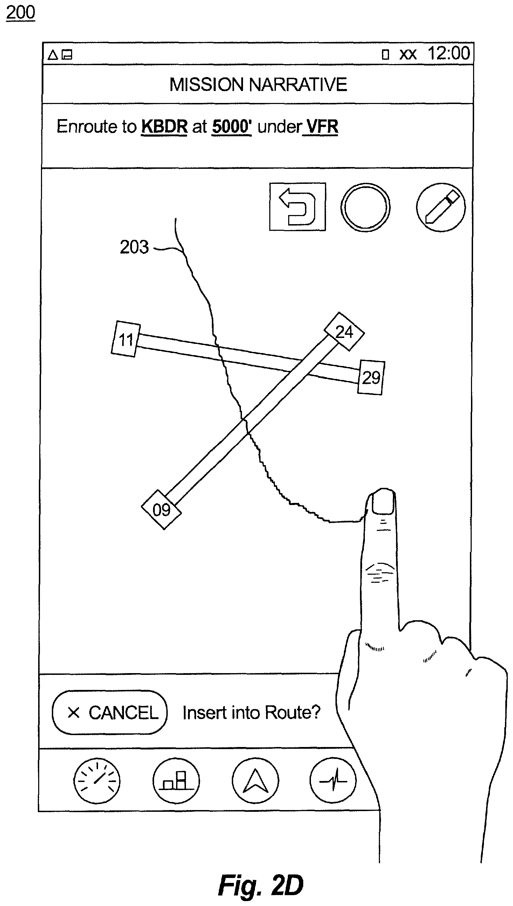

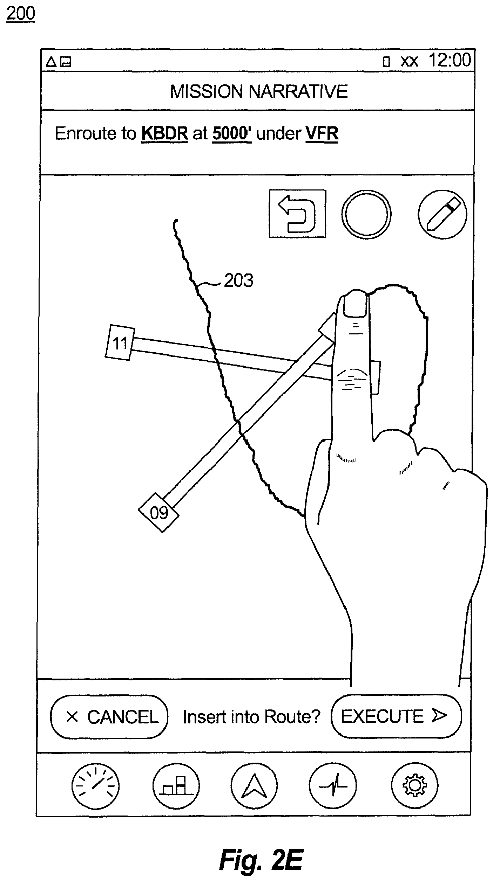

Reference will now be made to the drawings wherein like reference numerals identify similar structural features or aspects of the subject disclosure. For purposes of explanation and illustration, and not limitation, an illustrative view of an embodiment of a method in accordance with the disclosure is shown in Fig. 1 and is designated generally by reference character 100. Other embodiments and/or aspects of this disclosure are shown in Figs. 2A-2H. The systems and methods described herein can be used to improve aircraft control and the ability of a user to make quick modifications to autonomous flight plans, for example. Any other suitable use is contemplated herein.

Referring to Figs. 1 and 2A, a non-transitory computer readable medium includes computer executable instructions for performing a method 100 and/or any suitable portion thereof, the method 100 comprising generating 101 a graphical user interface (GUI) 200 on a display (e.g., a touch screen or any other suitable device). The GUI 200 can be configured to display aircraft route information (e.g., terminal route information as shown). As shown in Fig. 2A, the aircraft route information can include an initial route 201 (e.g., calculated by an autonomous flight controller) before any inputs are received by the GUI 200, for example. As shown, the GUI 200 can include a text readout of an interpretation of the current route.

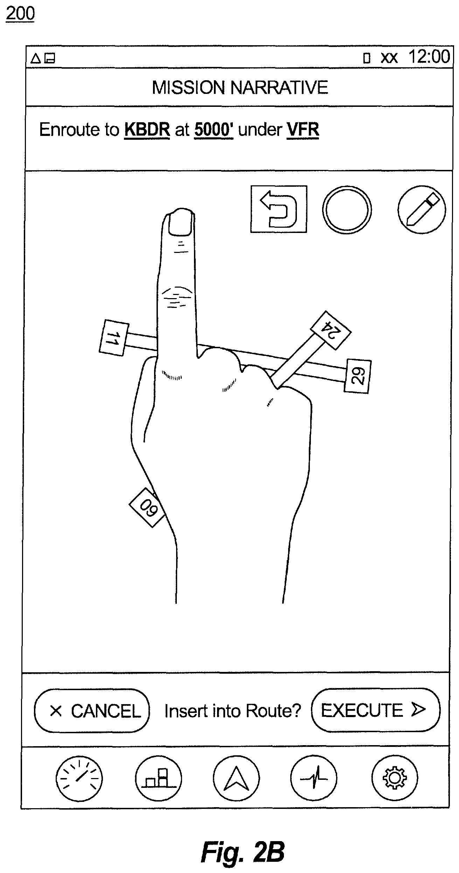

Referring additionally to Figs. 2B-2E, the GUI 200 is configured to receive one or more real-time aircraft route inputs 203. The method 100 can also include receiving 103, at the GUI 200, the one or more real-time aircraft route inputs from an input device. The input device can be a touch screen as shown, a digital pointer (e.g., a mouse type pointer) or any other suitable input device configured to allow a route to be drawn freeform (e.g., via dragging as shown, via one or more input points). Any suitable input device is contemplated herein.

While it is shown that the initial route 201 can disappear when the GUI 200 is receiving the one or more real-time aircraft route inputs 203, it is contemplated that the initial route 201 can stay visible for any suitable length of time, or until any suitable occurrence (e.g., the execution of a conformed route described below).

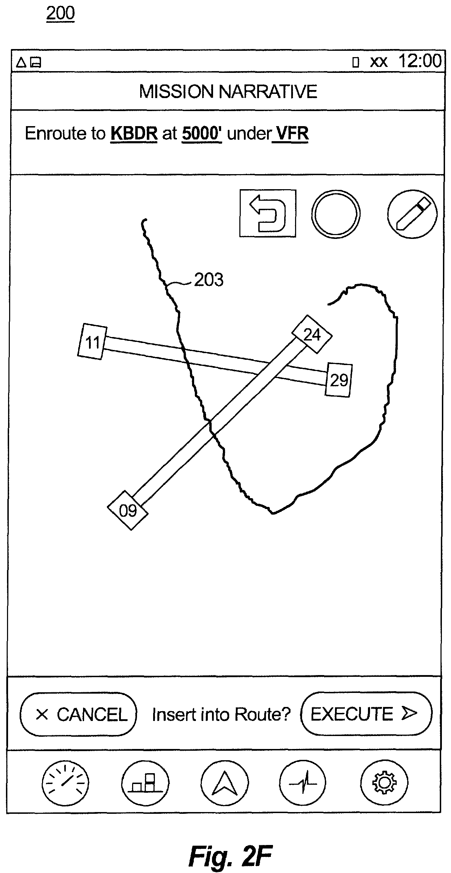

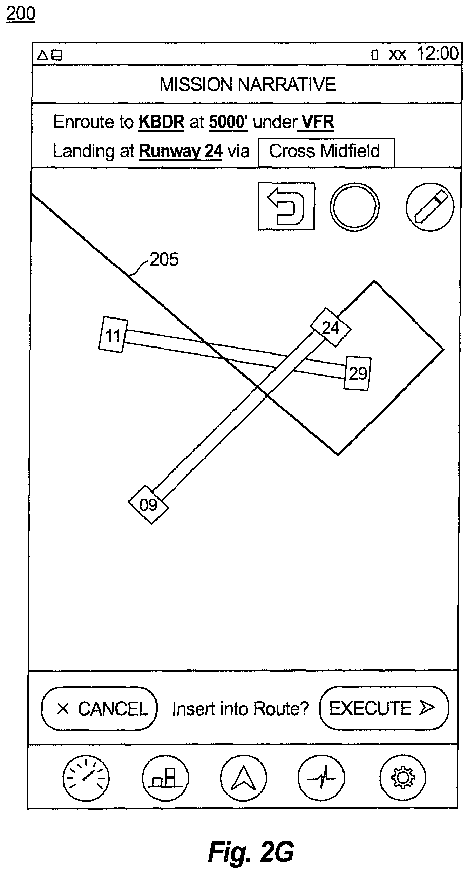

Referring to Figs. 2F and 2G, the method 100 can include conforming 105 the one or more real-time aircraft route inputs 203 (e.g., as shown in Fig. 2F) to a conformed route 205 (e.g., as shown in Fig. 2G). The method 100 can include outputting 107 a conformed route to at least one of the GUI 200 (e.g., as shown) and/or an aircraft control system (e.g., an autonomous flight system or any suitable autopilot system). While it is shown, graphic display of the conformed route 205 is not necessary. However, display may be needed, for example, where a user must approve the conformed route to execute it.

As shown, the method 100 can include displaying the real-time aircraft route inputs 203 as they are created. For example, real-time route inputs 203 can be drag created (e.g., drawn on) using the input device. In certain embodiments, the input device can include a touchscreen interface, for example (e.g., to allow a user draw a route in real-time with their finger). Real-time aircraft route inputs 203 can be input in any other suitable manner (e.g.. by tapping and/or pointer clicking successive goalpoints on the screen instead of dragging).

Conforming 105 the one or more real-time aircraft route inputs 203 to a conformed route 205 can include determining at least one of one or more route goalpoints, one or more altitudes along the route, one or more descent and/or climb rates along the route, one or more airspeeds along the route, one or more obstacle and/or terrain factors, and/or one or more aircraft system configurations along the route based on the one or more real-time aircraft route inputs. Any other suitable flight characteristics and/or factors affecting flight to be determined are contemplated herein. The one or more goalpoints can include one or more charted waypoints, for example (e.g., useable for an IFR flight plan).

For example, conforming 105 can include determining a present location of the aircraft and requiring the conformed route to include a path which the aircraft is already on so the aircraft does not start off-route. Conforming 105 can include flying the aircraft at a particular rate of descent (e.g., 500 feet per minute) as long as terrain and/or obstacle clearance is assured along the route. Any suitable conformance 105 for safety and/or for particular flight rules (e.g., VFR, IFR, etc.) or mission type (medevac, search and rescue, cargo, etc.,) is contemplated herein.

As shown, a real-time aircraft route input 203 can be quite imperfect (e.g., due to the speed of drawing, due to flight roughness, etc.) compared to a path of straight line segments or smooth trajectories. Conforming 105 can therefore include squaring off the route input 203 (e.g., as shown) and/or otherwise smoothing the route input 203 in any suitable manner.

In certain embodiments, conforming 105 the one or more real-time aircraft route inputs 203 to a conformed route 205 can include conforming 105 the real-time aircraft route inputs 203 to one or more flight standards. For example, the one or more flight standards can include at least one of visual flight rules, instrument flight rules, obstacle clearance, traffic clearance, or airspace speed limitations. Any suitable standard is contemplated herein.

As shown in Figs. 2A-2H, in certain embodiments, the displayed aircraft route information can include an airport runway diagram (e.g., for the approach and landing phase of flight). Many airports have nice controlled/uncontrolled fields/runways with published information but in other missions (military for example or civil medevac) the landing site could be anywhere (e.g., a road, a field), and the displayed aircraft rout information can include an ad hoc diagram or landing zone display using any suitable available data for the unpublished/off-runway landing zone.

Conforming 105 the one or more real-time aircraft route inputs 203 to a conformed route 205 can include approximating the one or more real-time aircraft route inputs 203 to an airport entry route (e.g., a midfield overflying entry as shown, a 45 degree downwind entry), an airport pattern (e.g., a traditional box left turn pattern as shown), and/or an approach (e.g., an instrument approach such as an ILS for runway 24). Any suitable terminal route conformance is contemplated herein. Also, embodiments disclosed herein can be used for any suitable phase or phases of flight (e.g., takeoff, climb out, cruise, descent, approach, landing).

In certain embodiments, conforming 105 the one or more real-time aircraft route inputs 203 to a conformed route 205 can include receiving obstacle and/or terrain sensor data and/or traffic data for obstacle and/or terrain and/or traffic avoidance. In certain embodiments, the method 100 can include automatically updating the conformed route 205 based on the obstacle and/or terrain sensor data as the aircraft progresses along the route to avoid obstacles and/or terrain (e.g., that may be sensed after calculation of the conformed route). Traffic avoidance (e.g., using inputs from ADS-B), can be used to prevent changing the path to one that would brings the aircraft too close to another aircraft (e.g., insufficient separation) such that the route is conformed to avoid traffic (e.g., to any suitable standard).

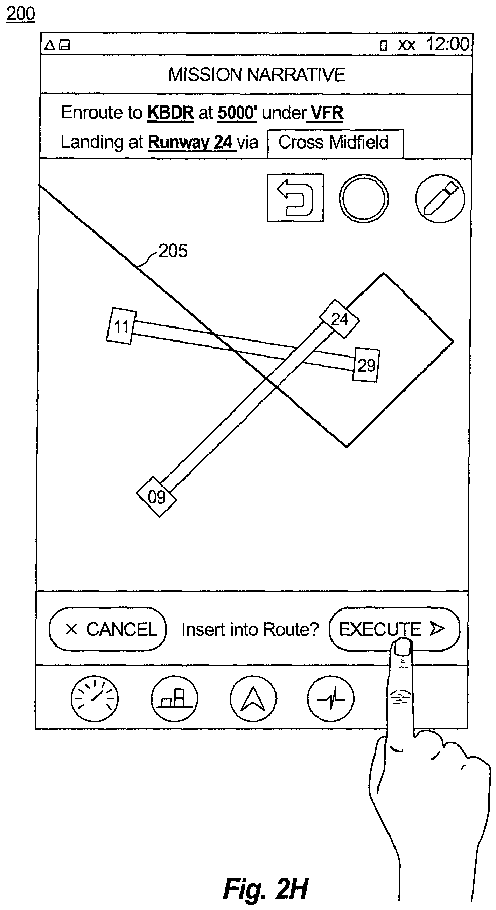

Referring to Figs. 2G and 2H, the method 100 can further include displaying the conformed route on the GUI 200 and requesting execution (e.g., via execute button 207) of the conformed route 205 before outputting the conformed route 205 to the aircraft control system. However, manual execution is not required and can be automated in any suitable manner. In certain embodiments, the conformed route 205 can be calculated and output (e.g., to the GUI 200 and/or to the aircraft control system) in real-time as the user inputs the real-time route input 203.

In certain embodiments, the real-time route input 203 can be "snapped to" a conformed route as its input, for example. The aircraft control system can begin to fly the aircraft along the real-time calculated conforming route without prior manual execution from the user. In certain embodiments, conforming 105 can include a combination of auto snapping for certain things, e.g., squaring off patterns, flying to midfield, flying at 90 degrees to a runway, flying over numbers, but not for complete conformance of the route for other things (e.g., terrain avoidance calculations).

In accordance with at least one aspect of this disclosure, an aircraft can include a navigational device (e.g., a suitable on-board aircraft navigational device, a Multi-Function Display (MFD)) having a non-transitory computer readable medium comprising computer executable instructions for performing a method 100 and/or any suitable portion thereof as described hereinabove. In certain embodiments, the aircraft can include one or more obstacle and/or terrain detection systems, e.g., configured to provide data to the navigational device. The one or more obstacle and/or terrain detection systems can include a LIDAR system, for example. In certain embodiments, the aircraft control system can be a smart system configured to control at least the aircraft position and power settings. Any other suitable control system is contemplated herein.

In accordance with at least one aspect of this disclosure, a portable computing device can include a non-transitory computer readable medium having computer executable instructions for performing a method 100 and/or any suitable portion thereof as described hereinabove. The portable device can be a touch-screen tablet, for example, or any other suitable device.

Embodiments can be implemented in any suitable non-portable device as well (e.g., an onboard computer, an air traffic control computer). Embodiments can be utilized by an onboard user and/or a remote user. Embodiments of a terminal route display may auto appear within a certain distance of an intended airport, for example. Any suitable GUI may be manually or automatically shown in any suitable manner.

Any suitable customization of one or more features of embodiments of GUI 200 is contemplate herein (e.g., color selection of the route input). Any suitable buttons for any suitable function for any embodiments of the GUI 200 are contemplated herein (e.g., a "Cancel" button, a pencil button required to be selected before drawing or otherwise inputting a route can begin).

Embodiments include an intuitive, quick way for an operator to input flight path changes into a path planner by electronically sketching the revised path directly on the display, e.g., with their finger, for example. In certain embodiments, the user can draw a new path and the underlying system is able to effectively discern the intent of the user in real-time as the user sketches and returns back a kinematically correct, updated path.

Embodiments can be implemented and/or integrated in any suitable aircraft system and/or any suitable remote control system. For example, embodiments of a GUI can be implemented on a ground control device for a remote user to operate a remotely controlled aircraft from the ground or any other suitable location.

As will be appreciated by those skilled in the art, aspects of the present disclosure may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

By way of example, aspects of the invention can be used in coaxial helicopters, on tail rotors, or wings or propeller blades on fixed or tilt wing aircraft.

This invention provides a fast, intuitive way to communicate revised ATC instructions to the path planner. This method is faster than speaking or selecting multiple options from a pick list and lends itself to rotary wing operations where the helicopter doesn't necessarily need to land on a runway.

The methods and systems of the present disclosure, as described above and shown in the drawings, provide for aircraft route systems with superior properties. While the apparatus and methods of the subject disclosure have been shown and described with reference to embodiments, those skilled in the art will readily appreciate that changes and/or modifications may be made thereto without departing from the spirit and scope of the subject disclosure.

## Claims

1. A method, the method comprising:
generating a graphical user interface (GUI) on a display, the GUI configured to display aircraft route information and to receive one or more real-time aircraft route inputs;
receiving, at the GUI, the one or more real-time aircraft route inputs from an input device;
conforming the one or more real-time aircraft route inputs to a conformed route;
outputting a conformed route to at least one of the GUI and/or an aircraft control system.

2. The method of claim 1, wherein the method further comprises displaying the real-time aircraft route inputs as they are created.

3. The method of claim 1 or 2, wherein real-time route inputs are drag created using the input device.

4. The method of one of claims 1 to 3, wherein the input device includes a touchscreen interface.

5. The method of one of claims 1 to 4, wherein the method further comprises displaying the conformed route on the GUI and requesting execution of the conformed route before outputting the conformed route to the aircraft control system.

6. The method of one of claims 1 to 5. wherein conforming the one or more real-time aircraft route inputs to a conformed route includes receiving obstacle and/or terrain sensor data and/or traffic data for obstacle and/or terrain and/or traffic avoidance.

7. The method of claim 6, wherein the method further comprises automatically updating the conformed route based on the obstacle and/or terrain sensor data as the aircraft progresses along the route to avoid obstacles and/or terrain.

8. The method of one of claims 1 to 7, wherein the displayed aircraft route information includes an airport runway diagram.

9. The method of claim 8, wherein conforming the one or more real-time aircraft route inputs to a conformed route includes approximating the one or more real-time aircraft route inputs to an airport entry route, an airport pattern, and/or an approach.

10. An aircraft, comprising:
an navigational device having a non-transitory computer readable medium comprising computer executable instructions for performing a method, the method comprising:
generating a graphical user interface (GUI) on a display, the GUI configured to display aircraft route information and to receive one or more real-time aircraft route inputs;
receiving, at the GUI, the one or more real-time aircraft route inputs from an input device;
conforming the one or more real-time aircraft route inputs to a conformed route;
outputting a conformed route to at least one of the GUI and/or an aircraft control system; and
an aircraft control system configured to receive the conformed route and to fly the aircraft along the conformed route.

11. The aircraft of claim 10, further comprising one or more obstacle and/or terrain detection systems, wherein conforming the one or more real-time aircraft route inputs to a conformed route includes receiving obstacle and/or terrain sensor data from the one or more obstacle and/or terrain detection systems for obstacle and terrain avoidance.

12. The aircraft of claim 11, further comprising automatically updating the conformed route based on the obstacle and terrain sensor data as the aircraft progresses along the route to avoid obstacles and/or terrain.

13. The aircraft of claim 11 or 12, wherein the one or more obstacle and/or terrain detection systems include a LIDAR system.

14. The aircraft of one of claims 10 to 13, wherein the aircraft control system is a smart system configured to control at least the aircraft position and power settings.

15. A computer readable storage medium having program instructions embodied therewith, the program instructions readable by a processor to cause the processor to perform a method according to any one of claims 1 to 9.
